(19) **Europäisches Patentamt / European Patent Office / Office européen des brevets**

(11) **EP 4 393 661 A1**

(12) # EUROPEAN PATENT APPLICATION
published in accordance with Art. 153(4) EPC

(43) Date of publication:
**03.07.2024 Bulletin 2024/27**

(21) Application number: **22860886.5**

(22) Date of filing: **27.04.2022**

(51) International Patent Classification (IPC):
***B25J 19/06*** *(2006.01)*

(52) Cooperative Patent Classification (CPC):
**B25J 19/06**

(86) International application number:
**PCT/JP2022/019089**

(87) International publication number:
**WO 2023/026589 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.08.2021 JP 2021138585**

(71) Applicant: **OMRON Corporation Kyoto 600-8530 (JP)**

(72) Inventor: **OSHIRO, Atsushi Kyoto-shi, Kyoto 600-8530 (JP)**

(74) Representative: **Mewburn Ellis LLP Aurora Building Counterslip Bristol BS1 6BX (GB)**

(54) **CONTROL APPARATUS, CONTROL METHOD, AND CONTROL PROGRAM**

(57) A control apparatus includes: a generation unit that generates a command for causing a manipulator to operate, based on a target operation selected in accordance with a risk value from a group; and a setting unit that sets a first group as the group when the manipulator is closer to a start position than a reference position, and sets a second group as the group when the manipulator is closer to a goal position than the reference position. The first group includes a first operation as an operation when the risk value is within a first range, the first operation being an operation that changes a trajectory. The second group includes: the first operation as an operation when the risk value is within a first subrange of the first range; and a second operation as an operation when the risk value is within a second subrange of the first range, the second operation being an operation that reduces a velocity without changing the trajectory.

FIG.1

**Description**

TECHNICAL FIELD

The present disclosure relates to a control apparatus, a control method and a control program.

BACKGROUND ART

In recent years, in the factory automation (FA) field, development of a cooperative work system that allows a human and a robot to work cooperatively has been under way. In the cooperative work system, avoidance of interference between a human and a robot is necessary.

"Justinas Miseikis, et al. (three other authors), "Multi 3D camera mapping for predictive and reflexive robot manipulator trajectory estimation", 2016 IEEE Symposium Series on Computational Intelligence (SSCI)" (NPL 1) discloses the technique of changing a trajectory of a robot in accordance with the cost indicating a possibility of interference between an object and a robot, so as to avoid interference between the object and the robot.

CITATION LIST

NON PATENT LITERATURE

NPL 1: Justinas Miseikis, et al. (three other authors), "Multi 3D camera mapping for predictive and reflexive robot manipulator trajectory estimation", 2016 IEEE Symposium Series on Computational Intelligence (SSCI)

SUMMARY OF INVENTION

TECHNICAL PROBLEM

According to the technique disclosed in NPL 1, when the object is a human, the trajectory of the robot may be frequently changed in accordance with the motion of the human. The change of the trajectory of the robot involves a heavy computing load. Therefore, the technique of reducing the computing load and suppressing the occurrence of interference between the object and the robot is desired.

The present disclosure has been made in light of the above-described problem, and an object thereof is to provide a control apparatus, a control method and a control program that make it possible to reduce a computing load and suppress the occurrence of interference between an object and a robot.

SOLUTION TO PROBLEM

According to one example of the present disclosure, a control apparatus controls a robot such that a manipulator of the robot moves from a start position to a goal position. The control apparatus includes: a calculation unit that calculates a risk value of interference between the manipulator and an object; and a generation unit that generates a command for causing the manipulator to operate, based on a target operation selected in accordance with the risk value from a group including a plurality of types of operations. The control apparatus further includes a setting unit that sets a first group as the group when the manipulator is closer to the start position than a reference position, and sets a second group as the group when the manipulator is closer to the goal position than the reference position. The first group includes a first operation as an operation when the risk value is within a first range, the first operation being an operation that changes a trajectory to lower the risk value. The second group includes: the first operation as an operation when the risk value is within a first subrange that is a part of the first range; and a second operation as an operation when the risk value is within a second subrange of the first range different from the first subrange, the second operation being an operation that reduces a velocity without changing the trajectory.

According to this disclosure, when the manipulator is close to the goal position, the frequency of change of the trajectory is reduced and a computing load of the control apparatus is reduced. When the manipulator is closer to the start position than the reference position and when the risk value is within the first range, the trajectory of the manipulator is changed to lower the risk value. Furthermore, when the manipulator is closer to the goal position than the reference position and when the risk value is within the first subrange, the trajectory of the manipulator is also changed to lower the risk value. Thus, the occurrence of interference between the object and the manipulator can be suppressed. As described above, according to the control apparatus above, it is possible to reduce the computing load and suppress the occurrence of interference between the object and the robot.

In the disclosure above, each of the first group and the second group includes a third operation as an operation when the risk value is within a second range that is below the first range, the third operation being an operation that causes the manipulator to operate at a standard velocity without changing the trajectory of the manipulator. The second operation causes the manipulator to operate at a velocity lower than the standard velocity.

According to this disclosure, when the risk value is within the second range, the trajectory is not changed. Therefore, the frequency of change of the trajectory is reduced and the computing load of the control apparatus is reduced. In addition, since the risk value is within the second range that is below the first range, the manipulator can be operated at the standard velocity higher than a velocity when the risk value is within the second subrange.

In the disclosure above, each of the first group and the second group includes a fourth operation as an operation when the risk value is within a third range that is above the first range, the fourth operation being an operation that returns the manipulator toward the start position.

According to this disclosure, the manipulator moves away from the object. As a result, the interference between the object and the robot is suppressed.

In the disclosure above, the calculation unit calculates the risk value such that the risk value becomes larger as an angle formed by a relative movement direction of the object with respect to the manipulator and a line connecting the object and the manipulator becomes closer to 0°.

According to this disclosure, as a possibility that the object is moving toward the manipulator becomes higher, the risk value becomes larger. Therefore, the risk value can correctly represent a possibility of interference between the object and the manipulator.

In the disclosure above, the calculation unit calculates the risk value such that the risk value becomes larger as a velocity of the object becomes higher, and calculates the risk value such that the risk value becomes larger as a distance between the object and the manipulator becomes shorter.

According to this disclosure as well, the risk value can correctly represent the possibility of interference between the object and the manipulator.

In the disclosure above, the calculation unit calculates the risk value such that the risk value becomes larger as a length from the start position to a current position of the manipulator along the trajectory of the manipulator becomes longer.

Damage to the object caused by interference between the object (e.g., a human) and the manipulator is greater when the manipulator is close to the goal position than immediately after the operation of the robot starts. According to this disclosure, the risk value can indicate a value that reflects how great the damage to the object is.

In the disclosure above, the calculation unit calculates the risk value using a risk function including a term and a constant term, the term including a distance between the object and the manipulator and a velocity of the object. A value of the constant term is negative. An upper limit value of the second range is 0.

According to this disclosure, it is easily recognized that when the risk value is less than 0, the possibility of interference between the object and the manipulator is low.

In the disclosure above, the calculation unit calculates the risk value using a risk function. The risk function includes a term given by

$$H(x) \times (v_{obs}^2/D) \times f(S_{cur}),$$

where x denotes a cosine of an angle formed by a relative movement direction of the object with respect to the manipulator and a line connecting the object and the manipulator, $v_{obs}$ denotes a velocity of the object, D denotes a distance between the manipulator and the object, and $S_{cur}$ denotes a length from the start position to a current position of the manipulator along the trajectory of the manipulator. H(x) becomes larger as x becomes closer to 1. $f(S_{cur})$ becomes larger as L becomes longer.

According to this disclosure, the risk value can correctly represent the possibility of interference between the object and the manipulator, and can indicate a value that reflects how great the damage to the object is.

H(x) includes, for example, a hyperbolic tangent function. $f(S_{cur})$ includes, for example, a sigmoid function.

In the disclosure above, a ratio of a movement velocity of the manipulator in the second operation to the standard velocity becomes smaller as a length from the start position to a current position of the manipulator along the trajectory of the manipulator becomes longer.

According to this disclosure, as the manipulator becomes closer to the goal position, the velocity in the second operation can be made lower. Thus, the occurrence of interference between the object and the manipulator is suppressed.

In the disclosure above, the calculation unit calculates the risk value such that the risk value becomes larger as an amount of loading of the manipulator becomes larger.

According to this disclosure, when the amount of loading of the manipulator is large, the robot can change the operation of the manipulator more quickly to suppress the interference between the manipulator and the object.

In the disclosure above, the calculation unit calculates the risk value using a risk function including a term and a constant term, the term including a distance between the object and the manipulator and a velocity of the object. The constant term is set in accordance with a human that works cooperatively with the robot.

According to this disclosure, for a human who conducts the work that is more likely to interfere with the manipulator, the risk value can be made larger. Thus, the occurrence of interference between the object and the manipulator is suppressed.

According to one example of the present disclosure, a control method controls a robot such that a manipulator of the robot moves from a start position to a goal position. The control method includes: calculating a risk value of interference between the manipulator and an object; and generating a command for causing the manipulator to operate, based on a target operation selected in accordance with the risk value from a group including a plurality of types of operations. The control method further includes setting a first group as the group when the manipulator is closer to the start position than a reference position, and setting a second group as the group when the manipulator is closer to the goal position than the reference position. The first group includes a first operation as an operation when the risk value is within a first range, the first operation being an operation that changes a trajectory to lower the risk value. The second group includes: the first operation as an operation when the risk value is within a first subrange that is a part of the first range; and a second operation as an operation when the risk value is within a second subrange of the first range different from the first subrange, the second operation being an operation that reduces a velocity without changing the trajectory.

According to one example of the present disclosure, a program causes a computer to perform the control method above. According to these disclosures as well, it is possible to reduce the computing load and suppress the occurrence of interference between the object and the robot.

ADVANTAGEOUS EFFECTS OF INVENTION

According to the present disclosure, it is possible to reduce a computing load and suppress the occurrence of interference between an object and a robot.

BRIEF DESCRIPTION OF DRAWINGS

Fig. 1 shows one example of a system to which a control apparatus according to an embodiment is applied.
Fig. 2 is a diagram illustrating a process performed by a setting unit.
Fig. 3 is a schematic diagram showing a hardware configuration of the control apparatus.
Fig. 4 shows one example of an OctoMap.
Fig. 5 is a graph showing one example of a sigmoid function.
Fig. 6 shows a relationship among velocity vectors $v_{obs}$ and $v_{tcp}$ and a vector v.
Fig. 7 shows one example of a direction function $H_{dict}$ of the velocity vectors.
Fig. 8 shows one example of the types of operations belonging to groups.
Fig. 9 shows one example of a flow of a process performed by the control apparatus.
Fig. 10 shows a relationship between velocity vectors $v_{obs}$ and $v_{tcp}$ and vector v and a value of direction function $H_{dict}$.

DESCRIPTION OF EMBODIMENTS

An embodiment of the present invention will be described in detail with reference to the drawings, in which the same or corresponding portions are denoted by the same reference characters and description thereof will not be repeated. Modifications described below may be selectively combined as appropriate.

§ 1 Application Example

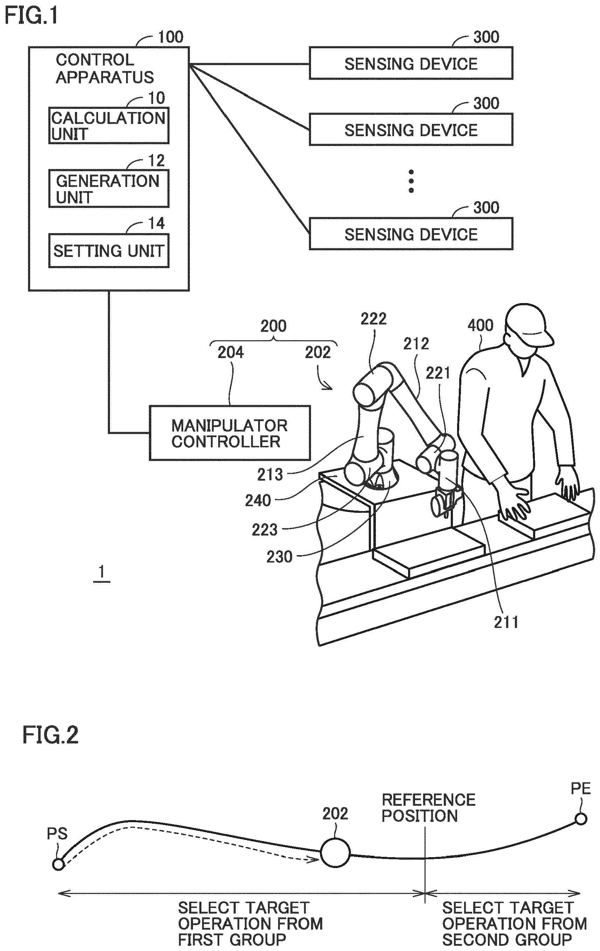

An overview of a system to which a control apparatus according to the present embodiment is applied will be described. Fig. 1 shows one example of a system to which a control apparatus according to an embodiment is applied. As shown in Fig. 1, a system 1 includes a control apparatus 100, a robot 200 and a plurality of sensing devices 300.

System 1 is provided in a production site such as a factory. As shown in Fig. 1, a human 400 and robot 200 work cooperatively in the production site. Human 400 is an obstacle to movement of robot 200 and interference may occur between human 400 and robot 200. System 1 performs a process for suppressing the interference between human 400 and robot 200.

Robot 200 includes a manipulator 202 and a manipulator controller 204.

Manipulator 202 has a plurality of arms 211, 212 and 213, a plurality of joints 221, 222 and 223, a rotator 230, and a base 240. Specifically, arm 211, joint 221, arm 212, joint 222, arm 213, joint 223, rotator 230, and base 240 are provided in this order in manipulator 202 from its edge side.

An end effector is attached to a tip of arm 211. A rear end of arm 211 is connected to joint 221. Joint 221 is attached to a tip of arm 212. A rear end of arm 212 is connected to joint 222. Joint 222 is attached to a tip of arm 213. A rear end of arm 213 is connected to joint 223.

Joint 221 moves arm 211 with respect to arm 212. Joint 222 moves arm 212 with respect to arm 213. Joint 223 moves arm 213 with respect to rotator 230.

Rotator 230 supports joint 223 and is rotatable around a rotation axis. Base 240 rotatably supports rotator 230.

Manipulator controller 204 controls the operation of manipulator 202. Specifically, manipulator controller 204 obtains, from control apparatus 100, a command about a target position and a movement velocity of a tip of manipulator 202, i.e., the tip of arm 211 (hereinafter, referred to as "tool center point (TCP)"). Manipulator controller 204 controls the operation of joints 221 to 223 and rotator 230 such that the tool center point moves in accordance with the obtained command.

Each sensing device 300 is a device arranged in a space where robot 200 is present, to detect a position of an object in the space. The object includes manipulator 202 and human 400. Each sensing device 300 is, for example, an RGB-D camera or a laser range finder, and generates point cloud data of a field of view. For example, four or more sensing devices 300 are preferably arranged at positions different from each other such that there is no blind spot in the space.

Control apparatus 100 controls robot 200 such that manipulator 202 of robot 200 moves from a start position to a goal position.

Control apparatus 100 is communicably connected to the plurality of sensing devices 300. Control apparatus 100 communicates with the plurality of sensing devices 300 using, for example, GigE Vision (registered trademark) or a universal serial bus (USB).

Control apparatus 100 is communicably connected to manipulator controller 204. Control apparatus 100 communicates with manipulator controller 204 using, for example, Ethernet/IP (registered trademark). Control apparatus 100 recognizes a current position of manipulator 202 by exchanging communication with manipulator controller 204.

As shown in Fig. 1, control apparatus 100 includes a calculation unit 10, a generation unit 12 and a setting unit 14.

Calculation unit 10 calculates a risk value of interference between manipulator 202 and an object (including human 400) around manipulator 202, based on results of detection by the plurality of sensing devices 300.

Generation unit 12 generates a command for causing robot 200 to operate, based on a target operation selected in accordance with the risk value from a group including a plurality of types of operations. Specifically, generation unit 12 determines a trajectory of the tool center point from the current position to the goal position, based on the target operation. Based on the determined trajectory, generation unit 12 specifies the target position and the movement velocity of the tool center point for each control cycle. Control apparatus 100 generates a command about the specified target position and the specified movement velocity for each control cycle, and outputs the generated command to manipulator controller 204.

Setting unit 14 sets the above-described group including the plurality of types of operations in accordance with the position of manipulator 202.

Fig. 2 is a diagram illustrating a process performed by the setting unit. As shown in Fig. 2, setting unit 14 sets a first group when manipulator 202 is closer to a start position PS than a reference position, and sets a second group when manipulator 202 is closer to a goal position PE than the reference position.

The first group includes a circumventing operation as an operation when the risk value is within a first range, the circumventing operation being an operation that changes the trajectory of manipulator 202 to lower the risk value.

The second group includes the above-described circumventing operation as an operation when the risk value is within a first subrange that is a part of the first range. Furthermore, the second group includes a warning operation as an operation when the risk value is within a second subrange of the first range different from the first subrange, the warning operation being an operation that reduces the velocity of manipulator 202 without changing the trajectory.

Thus, when manipulator 202 is close to goal position PE, the frequency of change of the trajectory is reduced and a computing load of control apparatus 100 is reduced.

In addition, when manipulator 202 is closer to start position PS than the reference position and when the risk value is within the first range, the trajectory of manipulator 202 is changed to lower the risk value. Furthermore, when manipulator 202 is closer to goal position PE than the reference position and when the risk value is within the first subrange, the trajectory of manipulator 202 is also changed to lower the risk value. Thus, the occurrence of interference between human 400 and manipulator 202 can be suppressed.

As described above, in control apparatus 100 according to the present embodiment, it is possible to reduce the computing load and suppress the occurrence of interference between human 400 and robot 200.

§ 2 Specific Example

<Hardware Configuration of Control Apparatus>

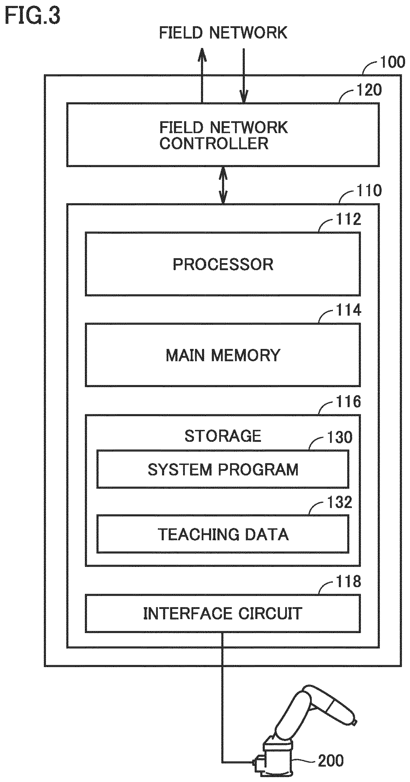

Fig. 3 is a schematic diagram showing a hardware configuration of the control apparatus. Control apparatus 100 typically has a structure based on a general-purpose computer architecture.

As shown in Fig. 3, control apparatus 100 includes a control process circuit 110 and a field network controller 120.

Control process circuit 110 performs a computation process required to drive robot 200. As one example, control process circuit 110 includes a processor 112, a main memory 114, a storage 116, and an interface circuit 118.

Processor 112 performs a control computation for driving robot 200. Main memory 114 includes, for example, a volatile storage device such as a dynamic random access memory (DRAM) or a static random access memory (SRAM). Storage 116 includes, for example, a non-volatile storage device such as a solid state drive (SSD) or a hard disk drive (HDD).

A system program 130 for achieving control of robot 200 is stored in storage 116. System program 130 includes an instruction for performing the control computation relating to the operation of robot 200, and an instruction relating to an interface with robot 200. Calculation unit 10, generation unit 12 and setting unit 14 shown in Fig. 1 are implemented by processor 112 performing system program 130.

Teaching data 132 is data about the predetermined trajectory of the tool center point of manipulator 202.

Interface circuit 118 exchanges data with robot 200.

Field network controller 120 exchanges data mainly with sensing devices 300 via a field network.

<Details of Process Performed by Calculation Unit>

Calculation unit 10 calculates the risk value of interference between manipulator 202 and the object at constant cycles. The details of the specific process performed by calculation unit 10 will be described below.

Calculation unit 10 obtains point cloud data from the plurality of sensing devices 300 in each cycle. The point cloud data obtained from each sensing device 300 is expressed in a coordinate system of this sensing device 300 (hereinafter, referred to as "camera coordinate system"). Therefore, calculation unit 10 converts the point cloud data obtained from each sensing device 300 from the camera coordinate system to a coordinate system of robot 200 (hereinafter, referred to as "robot coordinate system"). A conversion matrix for conversion from the camera coordinate system to the robot coordinate system is created by calibration performed in advance for each sensing device 300.

If the whole of the obtained point cloud data is used, the computing load is heavy. Therefore, calculation unit 10 generates an OctoMap from the point cloud data.

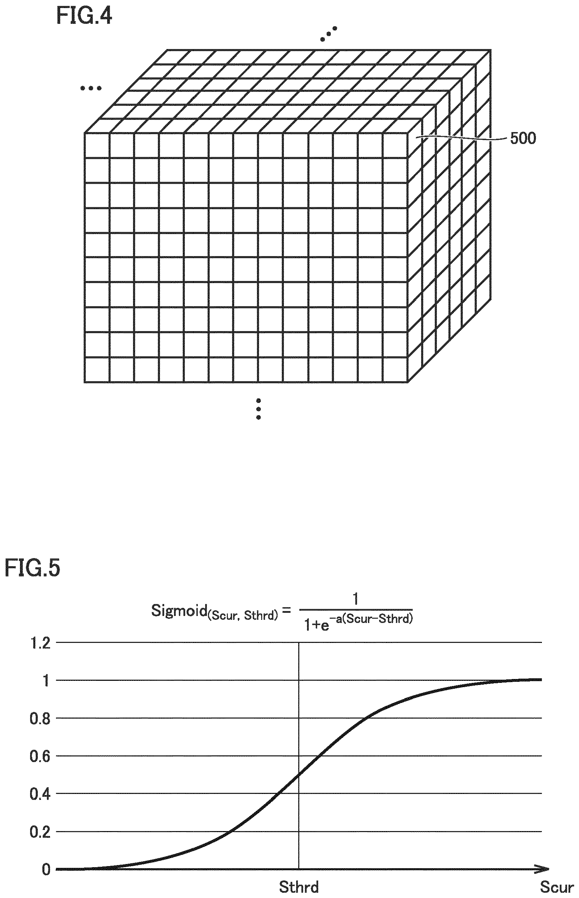

Fig. 4 shows one example of the OctoMap. As shown in Fig. 4, the OctoMap indicates an occupancy rate of an object in each of a plurality of three-dimensional cubic voxels 500 obtained by partitioning the space. The object may include not only manipulator 202 and human 400 but also an obstacle that is unintentionally placed around manipulator 202, for example. Calculation unit 10 introduces voxels 500 into the point cloud data and calculates the occupancy rate for each voxel 500. The occupancy rate is indicated by, for example, a value ranging from 0.00 to 100. A known method (e.g., the technique described in NPL 1) can be used as a method for generating the OctoMap from the point cloud data. As described above, calculation unit 10 generates the OctoMap for each cycle.

Control apparatus 100 recognizes the current position of manipulator 202 by exchanging communication with manipulator controller 204. Therefore, calculation unit 10 may delete, from the OctoMap, a voxel in which manipulator 202 is present. Thus, a below-described computing load using the OctoMap is reduced.

Calculation unit 10 calculates a risk value $I_{risk}$ of interference between manipulator 202 and the object (mainly, human 400) in each cycle in accordance with Equation (1) below:

[Equation 1]

$$I_{risk} = H_{dict} \frac{|v_{obs}|^2}{D_{eucl}} \left(1 + Sigmoid_{(S_{cur}, S_{thrd,})}\right) + P_{scoli} + P_{bias}$$

Equation (1).

In Equation (1), $H_{dict}$ denotes a direction function of velocity vectors of manipulator 202 and human 400. $v_{obs}$ denotes a velocity vector of human 400. $D_{eucl}$ denotes a distance between the tool center point of manipulator 202 and human 400. Sigmoid($S_{cur}$, $S_{thrd}$) denotes a sigmoid function. $S_{cur}$ denotes a length from the start position to the current position of the tool center point along the trajectory. $S_{thrd}$ denotes a predetermined threshold value and is, for example, a length that is 0.6 to 0.7 times as long as a length from the start position to the goal position along the trajectory. $P_{scoli}$

denotes a circumventing operation term about a static obstacle. $P_{bias}$ denotes a normalcy bias term and is a predetermined negative constant term.

Calculation unit 10 specifies a position of human 400 using the OctoMap in each cycle. An occupancy rate of a voxel in which human 400 is present takes a high value. Therefore, calculation unit 10 specifies the position of human 400 based on a position of a voxel having a high occupancy rate in the OctoMap.

Calculation unit 10 may perform a binarization process on the OctoMap such that the occupancy rate of each voxel takes either 0 or 1, and specify the position of human 400 using the binarized OctoMap. Thus, the computing load is further reduced.

Calculation unit 10 calculates distance $D_{eucl}$ based on the current position of the tool center point of manipulator 202 and the position of human 400 specified from the OctoMap generated in a current cycle.

Calculation unit 10 calculates velocity vector $v_{obs}$ of human 400 using the OctoMap generated in a past certain time period.

Calculation unit 10 calculates length $S_{cur}$ based on the current position of the tool center point of manipulator 202 and a trajectory of the tool center point. The trajectory of the tool center point is generated by generation unit 12 as described below.

Sigmoid function Sigmoid($S_{cur}$, $S_{thrd}$) is given by Equation (2) below. In Equation (2), a is a constant.

[Equation 2]

$$Sigmoid(S_{cur}, S_{thrd}) = \frac{1}{1+e^{-a(S_{cur}-S_{thrd})}} \quad \cdot \cdot \text{ Equation (2)}$$

Fig. 5 is a graph showing one example of the sigmoid function. As shown in Fig. 5, sigmoid function Sigmoid($S_{cur}$, $S_{thrd}$) becomes larger as $S_{cur}$ becomes closer to $S_{thrd}$ from a value smaller than $S_{thrd}$, and becomes closer to 1 when $S_{cur}$ exceeds $S_{thrd}$. An inclination near $S_{thrd}$ depends on constant a. As a value of constant a becomes larger, the inclination near $S_{thrd}$ becomes steeper.

Calculation unit 10 calculates, as circumventing operation term $P_{scoli}$, a value obtained by multiplying a total value of occupancy rates of one or more voxels present on the trajectory of the tool center point from the current position to the target position by a specified coefficient. When no object is present on the trajectory, circumventing operation term $P_{scoli}$ is 0. The trajectory is generated by generation unit 12 as described below. Therefore, calculation unit 10 calculates circumventing operation term $P_{scoli}$ using the trajectory generated by generation unit 12. The trajectory at the start of the operation is indicated by teaching data 132 stored in storage 116.

Direction function $H_{dict}$ of the velocity vectors is given by Equation (3) below. As shown in Equation (3), direction function $H_{dict}$ is a hyperbolic tangent function. In Equation (3), K and b are constants and are set at, for example, 3/2 and 10, respectively. A variable x in Equation (3) is calculated in accordance with Equation (4).

[Equation 3]

$$H_{dict} = K(1 + \tanh(b(x - x_{thrd})))$$
$$= K \left( 1 + \frac{e^{b(x-x_{thrd})} - e^{-b(x-x_{thrd})}}{e^{b(x-x_{thrd})} + e^{-b(x-x_{thrd})}} \right) \quad \cdot \cdot \text{ Equation (3)}$$

[Equation 4]

$$x = \frac{(v_{obs} - v_{tcp}) \cdot v}{|v_{obs} - v_{tcp}| \cdot |v|} \quad \cdot \cdot \text{ Equation (4)}$$

$v_{tcp}$ denotes a velocity vector of the tool center point of manipulator 202. Calculation unit 10 calculates velocity vector $v_{tcp}$ based on a latest command output to manipulator controller 204.

v denotes a vector starting from the position of human 400 and ending at the position of the tool center point. Calculation unit 10 calculates vector v based on the current position of the tool center point and the position of human 400 specified from the OctoMap in the current cycle.

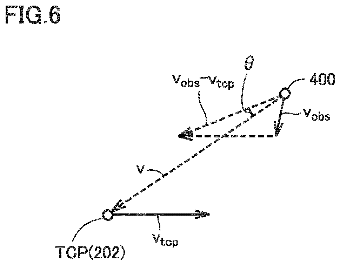

Fig. 6 shows a relationship among velocity vectors $v_{obs}$ and $v_{tcp}$ and vector v. As shown in Fig. 6, x calculated in accordance with Equation (4) above is a cosine ($\cos\theta$) of an angle $\theta$ formed by the vector ($v_{obs}$-$v_{tcp}$) and vector v. Therefore, x takes a value ranging from -1 to 1.

In other words, angle $\theta$ is an angle formed by a relative movement direction of human 400 with respect to tool center point TCP and a line connecting human 400 and tool center point TCP. Therefore, as x becomes closer to 1, a possibility that human 400 is moving toward tool center point TCP becomes higher.

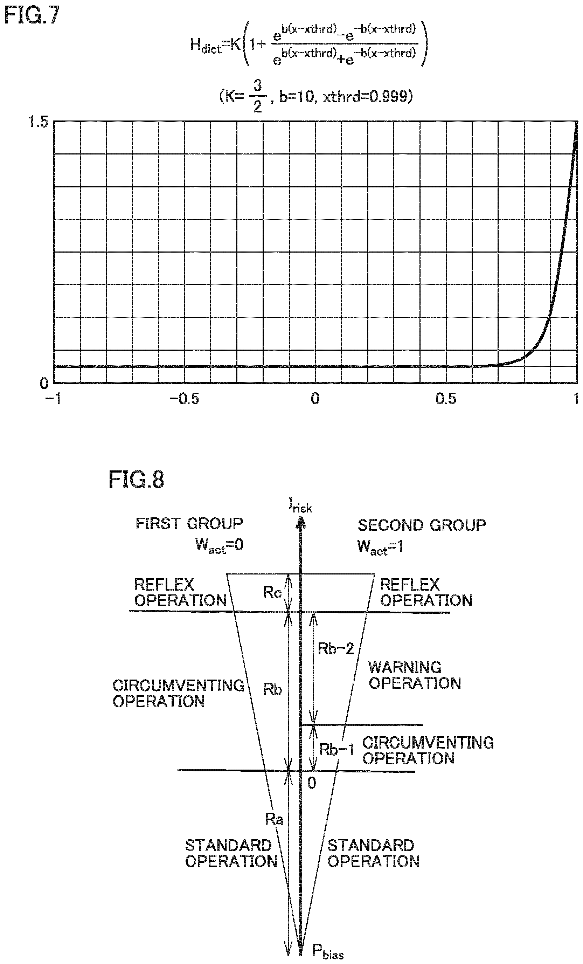

Fig. 7 shows one example of direction function $H_{dict}$ of the velocity vectors. Fig. 7 shows direction function $H_{dict}$ when K=3/2, b=10 and $x_{thrd}$=0.999. As shown in Fig. 7, direction function $H_{dict}$ rises steeply from around x=0.76. When angle θ shown in Fig. 6 is 40° (θ=40°), x is 0.766 (x=0.766). That is, when angle θ formed by the relative movement direction of human 400 with respect to tool center point TCP and the line connecting human 400 and tool center point TCP is within the range of -40° to 40°, direction function $H_{dict}$ takes a significant value, and when angle θ is outside this range, direction function $H_{dict}$ is about 0.

An angle at which the cosine is 0.999 is ±2.56°. Therefore, when angle θ is within the range of -2.56° to 2.56°, direction function $H_{dict}$ takes a value of K or more.

Calculation unit 10 substitutes the variable calculated as described above into Equation (1), to thereby calculate risk value $I_{risk}$ of interference between manipulator 202 and the object in each cycle.

In Equation (1), direction function $H_{dict}$ is present as a coefficient of a first term. Therefore, when angle θ formed by the relative movement direction of human 400 with respect to the tool center point and the line connecting human 400 and the tool center point is outside the range of -40° to 40°, the first term is about 0. When angle θ is within the range of -40° to 40°, the first term takes a positive significant value. At this time, as angle θ becomes smaller (closer to 0°), risk value $I_{risk}$ becomes larger. In addition, in the first term, distance $D_{eucl}$ between the tool center point and human 400 is present in the denominator. Therefore, as distance $D_{eucl}$ becomes smaller, risk value $I_{risk}$ becomes larger. Furthermore, in the first term, a square of velocity vector $v_{obs}$ of human 400 is present in the numerator. Therefore, as the velocity of human 400 becomes higher, risk value $I_{risk}$ becomes larger.

When angle θ is outside the range of -40° to 40°, a possibility of interference between human 400 and manipulator 202 is low. In contrast, when angle θ is outside the range of -40° to 40°, there is the possibility of interference between human 400 and manipulator 202, and the possibility becomes higher as angle θ becomes smaller. In addition, as the tool center point and human 400 becomes closer to each other, the possibility of interference between manipulator 202 and human 400 becomes higher. Furthermore, as the velocity of human 400 becomes higher, the possibility of interference between manipulator 202 and human 400 becomes higher. Therefore, risk value $I_{risk}$ correctly represents the possibility of interference between human 400 and manipulator 202.

The first term includes sigmoid function Sigmoid($S_{cur}$, $S_{thrd}$). As shown in Fig. 5, sigmoid function Sigmoid($S_{cur}$, $S_{thrd}$) becomes larger as $S_{cur}$ becomes larger, i.e., as the tool center point of manipulator 202 becomes closer to the goal position. Therefore, Equation (1) is set such that as the tool center point of manipulator 202 becomes closer to the goal position, risk value $I_{risk}$ becomes higher. This is because damage to human 400 caused by interference between manipulator 202 and human 400 becomes greater when the tool center point of manipulator 202 is close to the goal position than immediately after the operation of robot 200 starts.

In a space around manipulator 202, an unintended obstacle may be present on the trajectory of manipulator 202. In such a case, a collision between manipulator 202 and the obstacle should be avoided. Therefore, Equation (1) includes circumventing operation term $P_{scoli}$.

<Details of Process Performed by Setting Unit>

In accordance with the position of manipulator 202, setting unit 14 sets either a first group or a second group as a group including a plurality of types of operations that can be performed by robot 200. The details of the process performed by setting unit 14 will be described below.

Setting unit 14 determines a warning action activation flag $W_{act}$ in accordance with Equation (5) below. Setting unit 14 sets the first group when warning action activation flag $W_{act}$ is 0, and sets the second group when warning action activation flag $W_{act}$ is 1.

[Equation 5]

$$W_{act} = \begin{cases} 1 & Sigmoid(S_{cur}, S_{thr}) > Th \\ 0 & Sigmoid(S_{cur}, S_{thrd}) \leq Th \end{cases} \quad \cdot \cdot \text{ Equation (5)}$$

In Equation (5), a threshold value Th is predetermined. A position that is away from the start position along the trajectory by length $S_{cur}$ when sigmoid function Sigmoid($S_{cur}$, $S_{thrd}$) exceeds threshold value Th from threshold value Th or less corresponds to the reference position. Therefore, threshold value Th is set in accordance with the reference position. Threshold value Th is set at, for example, a value close to 0 (such as 0.05 to 0.1). Depending on the number of significant digits, the value of sigmoid function Sigmoid($S_{cur}$, $S_{thrd}$) may be continuously 0 for a while since the tool center point has started from the start position. Therefore, 0 may be set as threshold value Th.

<Details of Process Performed by Generation Unit>

Generation unit 12 generates a command for causing robot 200 to operate, based on the target operation selected from the set group in accordance with risk value $I_{risk}$. The details of the process performed by generation unit 12 will be described below.

Fig. 8 shows one example of the types of operations belonging to the groups. As shown in Fig. 8, the first group includes a standard operation, a circumventing operation and a reflex operation. The second group includes a standard operation, a circumventing operation, a warning operation, and a reflex operation.

When the first group is set, generation unit 12 selects the target operation as described below. Specifically, when risk value $I_{risk}$ is within a range Ra, generation unit 12 selects the standard operation as the target operation. When risk value $I_{risk}$ is within a range Rb that is above range Ra, generation unit 12 selects the circumventing operation. When risk value $I_{risk}$ is within a range Rc that is above range Rb, generation unit 12 selects the reflex operation.

When the second group is set, generation unit 12 selects the target operation as described below. Specifically, when risk value $I_{risk}$ is within range Ra, generation unit 12 selects the standard operation as the target operation. When risk value $I_{risk}$ is within a subrange Rb-1 that is a part of range Rb, generation unit 12 selects the circumventing operation. When risk value $I_{risk}$ is within a subrange Rb-2 of range Rb different from subrange Rb-1, generation unit 12 selects the warning operation. Subrange Rb-2 is a range that is above subrange Rb-1. When risk value $I_{risk}$ is within range Rc, generation unit 12 selects the reflex operation.

(Standard Operation)

The standard operation is selected when the possibility of interference between manipulator 202 and the object is low. Therefore, range Ra is, for example, set to range from $P_{bias}$ (negative value), which is a minimum value that can be taken by risk value $I_{risk}$, to 0. That is, an upper limit value of range Ra is 0. In this case, it can be easily recognized that when risk value $I_{risk}$ is 0 or less, the possibility of interference between manipulator 202 and the object is low.

The standard operation is an operation that maintains a standard velocity without changing the trajectory. The standard velocity is a velocity of the tool center point calculated for each point on the trajectory such that a maximum velocity on the trajectory becomes equal to a preset velocity. At the start of the operation, generation unit 12 selects the trajectory indicated by teaching data 132. Generation unit 12 maintains the trajectory indicated by teaching data 132, unless generation unit 12 selects the circumventing operation as the target operation. When generation unit 12 selects the circumventing operation as the target operation and then selects the standard operation as the target operation, generation unit 12 maintains the trajectory changed by the circumventing operation.

Generation unit 12 specifies a target position and a standard velocity of the tool center point for each control cycle, based on the trajectory. Control apparatus 100 generates a command about the specified target position and the specified standard velocity for each control cycle, and outputs the generated command to manipulator controller 204.

(Circumventing Operation)

The circumventing operation is an operation that changes the trajectory to lower risk value $I_{risk}$. Generation unit 12 specifies a target position and a movement velocity of the tool center point in a next control cycle, based on the changed trajectory. Control apparatus 100 generates a command about the specified target position and the specified movement velocity, and outputs the generated command to manipulator controller 204.

Generation unit 12 may determine the changed trajectory using a known technique (e.g., technique disclosed in NPL 1). Specifically, generation unit 12 searches for a plurality of trajectory candidates from the current position to the goal position using a Rapidly-exploring Random Trees (RRT)-Connect method. This search is performed within a predetermined time limit. For each of the plurality of searched trajectory candidates, generation unit 12 calculates cost $C_{traj}$ using Equation (6) below:
[Equation 6]

$$C_{traj} = \sum_{voxel} \left( D_{traj} + D_{traj} * C_{voxel} \right)$$

$$= \sum_{voxel} D_{traj} + \sum_{voxel} D_{traj} * C_{voxel} \qquad \cdot\cdot \text{ Equation (6)}$$

9

$D_{traj}$ is a Euclidean distance of a voxel. A first term of Equation (6) is a total of Euclidean distances of voxels through which the trajectory candidates pass. $C_{voxel}$ denotes an occupancy rate of each voxel through which each trajectory candidate passes. A second term of Equation (6) denotes a probability of the presence of an object on a trajectory candidate.

Generation unit 12 determines a trajectory candidate having smallest cost $C_{traj}$ as the changed trajectory. As a result, the trajectory is changed such that the possibility of interference between manipulator 202 and the object is low.

(Warning Operation)

The warning operation is an operation that reduces the velocity without changing the trajectory. Specifically, generation unit 12 specifies a target position and a standard velocity of the tool center point for each control cycle using the same method as that of the standard operation. Next, generation unit 12 determines a half of the specified standard velocity as a movement velocity. Generation unit 12 generates a command about the target position and the determined movement velocity, and outputs the generated command to manipulator controller 204.

Alternatively, generation unit 12 may determine a movement velocity $V_{curr}$ in accordance with Equation (7) below. In Equation (7), $V_{std}$ denotes the standard velocity specified in the standard operation.

[Equation 7]

$$V_{curr} = \left(1 - Sigmoid(S_{cur}, S_{thrd})\right)V_{std} \quad \cdot \cdot \text{Equation (7)}$$

When movement velocity $V_{curr}$ is determined in accordance with Equation (7), movement velocity $V_{curr}$ during the warning action becomes lower as manipulator 202 becomes closer to the goal position. In other words, a ratio of movement velocity $V_{curr}$ of manipulator 202 in the warning operation to standard velocity $V_{std}$ becomes smaller as length $S_{cur}$ from the start position to the current position of manipulator 202 along the trajectory of manipulator 202 becomes longer.

(Reflex Operation)

The reflex operation is an operation that returns manipulator 202 toward the start position along the trajectory. Specifically, generation unit 12 generates a command to return to a target position in a control cycle preceding by one or more control cycles, and outputs the generated command to manipulator controller 204.

<Process Flow Performed by Control Apparatus>

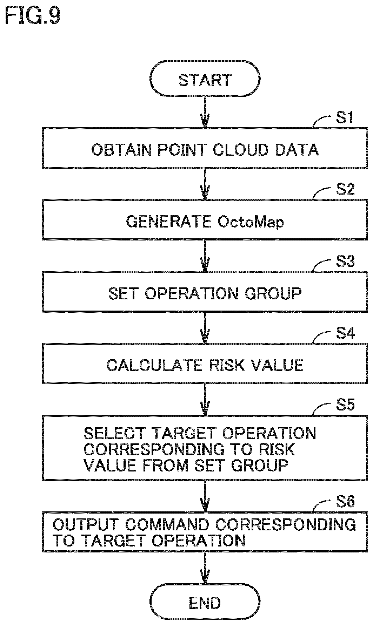

Fig. 9 shows one example of a flow of a process performed by the control apparatus. Steps S1 to S6 shown in Fig. 9 are repeatedly performed at constant cycles in a time period from start to end of the operation of the robot.

First, processor 112 of control apparatus 100 obtains point cloud data from each of the plurality of sensing devices 300 (step S1).

Next, processor 112 generates an OctoMap for a space around manipulator 202 using the obtained point cloud data (step S2).

Next, processor 112 sets a group including a plurality of types of operations, based on a current position of manipulator 202 (step S3). Specifically, processor 112 calculates warning action activation flag $W_{act}$, and sets a first group when warning action activation flag $W_{act}$ is 0, and sets a second group when warning action activation flag $W_{act}$ is 1.

Next, processor 112 calculates risk value $I_{risk}$ of interference between manipulator 202 and human 400 using the OctoMap (step S4).

Next, processor 112 selects a target operation corresponding to risk value $I_{risk}$ from the set group (step S5).

Next, processor 112 generates a command based on the selected target operation, and outputs the generated command to manipulator controller 204 (step S6).

When an unintended obstacle is placed on the trajectory at the start of the operation, circumventing operation term $P_{scoli}$ in Equation (1) takes a large value. Since the first group is set immediately after the operation starts, risk value $I_{risk}$ is within range Rb and the circumventing operation is performed. As a result, the trajectory is changed to circumvent the obstacle.

When no obstacle is present on the trajectory at the start of the operation, the standard operation is performed in accordance with the trajectory indicated by teaching data 132. When there is no human 400 around manipulator 202, risk value $I_{risk}$ calculated at constant cycles is less than 0 and is maintained within range Ra. Therefore, manipulator 202 moves from the start position to the goal position along the trajectory indicated by teaching data 132.

During a time period from the start of the operation to the arrival of manipulator 202 at the reference position, the first group is set. When human 400 approaches robot 200 during this time period, risk value $I_{risk}$ exceeds 0 and enters range Rb. Thus, the trajectory is changed to circumvent human 400. As a result, the interference between manipulator 202 and human 400 is suppressed. When risk value $I_{risk}$ enters range Ra after the trajectory is changed, the standard operation is performed, and manipulator 202 is operated at the standard velocity along the changed trajectory.

In contrast, during a time period from the passage of manipulator 202 through the reference position to the arrival of manipulator 202 at the goal position, the second group is set. When human 400 approaches robot 200 during this time period, risk value $I_{risk}$ exceeds 0 and enters range Rb. When risk value $I_{risk}$ is within lower-side range Rb-1 of range Rb, the interference with human 400 can possibly be avoided by a slight change of the trajectory. Therefore, when risk value $I_{risk}$ is within range Rb-1, the circumventing operation is performed. In contrast, if the circumventing operation is selected when risk value $I_{risk}$ is within upper-side range Rb-2 of range Rb, the trajectory can possibly be greatly changed in order to avoid the interference with human 400. The great change of the trajectory at the timing at which manipulator 202 is close to the goal position is not preferable. Therefore, when risk value $I_{risk}$ is within range Rb-2, the warning operation is performed. That is, manipulator 202 is operated at a velocity lower than the standard velocity, without changing the trajectory. Thus, human 400 can notice the presence of manipulator 202 and take time to move away from manipulator 202. As a result, the interference between manipulator 202 and human 400 is suppressed.

When risk value $I_{risk}$ is within range Rc that is above range Rb, the interference between manipulator 202 and human 400 is about to occur. Therefore, when risk value $I_{risk}$ is within range Rc, the reflex operation is performed. Thus, manipulator 202 moves away from human 400. As a result, the interference between manipulator 202 and human 400 is suppressed.

<Modifications>

Manipulator 202 may move in the state of being loaded with various objects. As an amount of loading of manipulator 202 becomes larger, an influence on human 400 when manipulator 202 and human 400 interfere with each other becomes greater. Therefore, calculation unit 10 may calculate risk value $I_{risk}$ such that risk value $I_{risk}$ becomes larger as the amount of loading of manipulator 202 becomes larger. For example, calculation unit 10 calculates risk value $I_{risk}$ of interference between manipulator 202 and an object (mainly human 400) in each cycle in accordance with Equation (8) below:
[Equation 8]

$$I_{risk} = H_{dict} \frac{m_{payload}(v_{obj}-v_{tcp})^2}{D_{eucl}} + R_{bias} \quad \cdot \cdot \text{ Equation (8)}.$$

Similarly to Equation (1), $H_{dict}$ denotes a direction function of velocity vectors of manipulator 202 and human 400. However, $H_{dict}$ may be given by Equation (3) above, or may be given by Equation (9) below:
[Equation 9]

$$H_{dict} = Sigmoid(x)$$
$$= \frac{1}{1+e^{(-a(x-b))}} \quad \cdot \cdot \text{ Equation (9)}.$$

In Equation (9), a and b are predetermined coefficients. For example, a and b are set at a=10 and b=0, respectively. x is calculated in accordance with Equation (4) above.

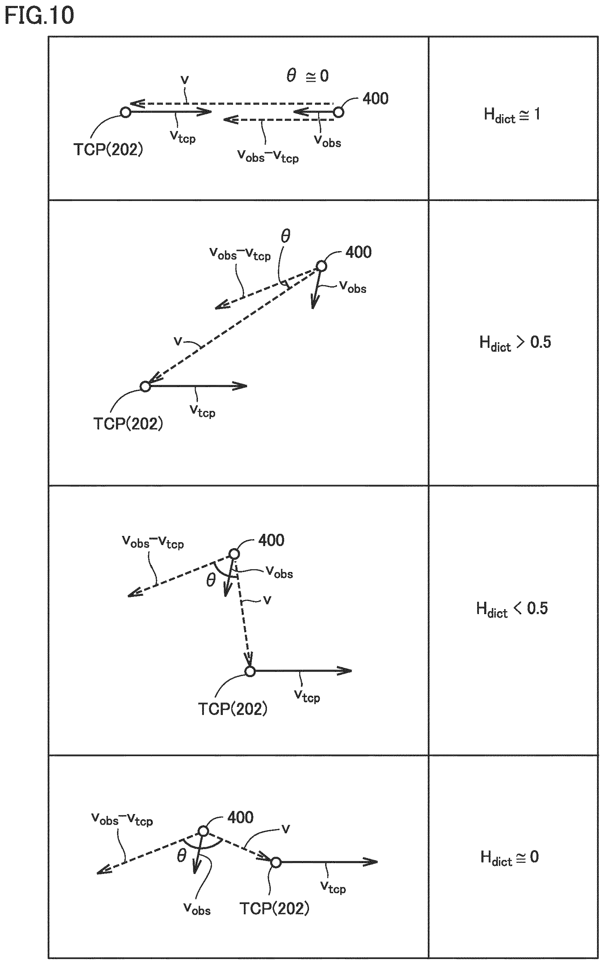

Fig. 10 shows a relationship between velocity vectors $v_{obs}$ and $v_{tcp}$ and vector v and direction function $H_{dict}$. As shown in Fig. 10, when velocity vectors $v_{obs}$ and $v_{tcp}$ face each other, i.e., when an angle $\theta$ formed by a vector $(v_{obs}-v_{tcp})$ and vector v is 0, $H_{dict}$ is 1. When angle $\theta$ is larger than 0 and smaller than 90°, $H_{dict}$ takes a value larger than 0.5. When angle $\theta$ is larger than 90°, $H_{dict}$ takes a value smaller than 0.5. As angle $\theta$ becomes closer to 180°, $H_{dict}$ becomes closer to 0.

In Equation (8), $m_{payload}$ is a term that takes a larger value as the amount of loading of manipulator 202 becomes larger. $m_{payload}$ is given by, for example, Equation (10) below:
[Equation 10]

$$m_{payload} = \alpha \left( \frac{P_{curr} - P_{min}}{P_{max} - P_{min}} \right) + m_{payload\_min} \quad \cdot \cdot \text{Equation (10).}$$

In Equation (10), $\alpha$ is a predetermined coefficient and is, for example, 1.0. $m_{payload\_min}$ denotes a minimum risk factor value and is predetermined. For example, $m_{payload\_min}$ is 1.0. $P_{max}$ denotes a maximum amount of loading of manipulator 202, and $P_{min}$ denotes a minimum amount of loading of manipulator 202. $P_{max}$ and $P_{min}$ are predetermined in accordance with specifications of manipulator 202. For example, $P_{max}$ is 10 kg and $P_{min}$ is 1 kg. $P_{curr}$ denotes a current amount of loading of manipulator 202. Robot 200 includes a sensor that measures the current amount of loading $P_{curr}$ of manipulator 202. Calculation unit 10 obtains the amount of loading $P_{curr}$ from this sensor of robot 200, and substitutes the obtained amount of loading $P_{curr}$ into Equation (10) above, to thereby calculate $m_{payload}$.

$R_{bias}$ is a constant term that adjusts risk value $I_{risk}$. $R_{bias}$ may be, for example, a sum of $P_{scoli}$ and Pbias in Equation (1). Alternatively, $R_{bias}$ may be predetermined in accordance with the risk in the past operational environment. For example, for a high-risk production site, a positive value is set as $R_{bias}$. For a low-risk production site, a negative value is set as $R_{bias}$ in order to reduce the frequency of change of action of robot 200.

Some humans may conduct the work that is more likely to interfere with manipulator 202, and others may conduct the work that is less likely to interfere with manipulator 202. Therefore, the value of $R_{bias}$ may be set in accordance with human 400 who works cooperatively with robot 200. For example, 0 is set as a default value of $R_{bias}$. Thereafter, transition of risk value $I_{risk}$ is recorded for each human 400. In accordance with a representative value (e.g., a median value or an average value) of recorded risk value $I_{risk}$, $R_{bias}$ is set for each human 400. Thus, for human 400 who conducts the work that is more likely to interfere with manipulator 202, the risk value can be made larger. As a result, the occurrence of interference between human 400 and manipulator 202 is suppressed. $P_{scoli}$ and Pbias in Equation (1) may also be set in accordance with human 400 who works cooperatively with robot 200.

By using Equation (8), risk value $I_{risk}$ corresponding to the amount of loading of manipulator 202 is calculated. As a result, when the amount of loading of manipulator 202 is large, robot 200 can change the operation of manipulator 202 more quickly to suppress the interference between manipulator 202 and human 400.

§ 3 Supplementary Notes

As described above, the present embodiment includes the following disclosure.

(Configuration 1)

A control apparatus (100) for controlling a robot (200) such that a manipulator (202) of the robot (200) moves from a start position to a goal position, the control apparatus (100) comprising:

a calculation unit (10) that calculates a risk value of interference between the manipulator (202) and an object (400);
a generation unit (12) that generates a command for causing the manipulator (202) to operate, based on a target operation selected in accordance with the risk value from a group including a plurality of types of operations; and
a setting unit (14) that sets a first group as the group when the manipulator (202) is closer to the start position than a reference position, and sets a second group as the group when the manipulator (202) is closer to the goal position than the reference position, wherein
the first group includes a first operation as an operation when the risk value is within a first range, the first operation being an operation that changes a trajectory to lower the risk value, and
the second group includes:

the first operation as an operation when the risk value is within a first subrange that is a part of the first range; and
a second operation as an operation when the risk value is within a second subrange of the first range different from the first subrange, the second operation being an operation that reduces a velocity without changing the trajectory.

(Configuration 2)

The control apparatus (100) according to Configuration 1, wherein

each of the first group and the second group includes a third operation as an operation when the risk value is within a second range that is below the first range, the third operation being an operation that causes the manipulator (202) to operate at a standard velocity without changing the trajectory of the manipulator, and

the second operation causes the manipulator (202) to operate at a velocity lower than the standard velocity.

(Configuration 3)

The control apparatus (100) according to Configuration 1 or 2, wherein
each of the first group and the second group includes a fourth operation as an operation when the risk value is within a third range that is above the first range, the fourth operation being an operation that returns the manipulator (202) toward the start position.

(Configuration 4)

The control apparatus (100) according to any one of Configurations 1 to 3, wherein
the calculation unit (10) calculates the risk value such that the risk value becomes larger as an angle formed by a relative movement direction of the object (400) with respect to the manipulator (202) and a line connecting the object (400) and the manipulator (202) becomes closer to 0°.

(Configuration 5)

The control apparatus (100) according to any one of Configurations 1 to 4, wherein
the calculation unit (10) calculates the risk value such that the risk value becomes larger as a velocity of the object (400) becomes higher, and calculates the risk value such that the risk value becomes larger as a distance between the object (400) and the manipulator (202) becomes shorter.

(Configuration 6)

The control apparatus (100) according to any one of Configurations 1 to 5, wherein
the calculation unit (10) calculates the risk value such that the risk value becomes larger as a length from the start position to a current position of the manipulator (202) along the trajectory of the manipulator (202) becomes longer.

(Configuration 7)

The control apparatus (100) according to Configuration 2, wherein

the calculation unit (10) calculates the risk value using a risk function including a term and a constant term, the term including a distance between the object (400) and the manipulator (202) and a velocity of the object (400),
a value of the constant term is negative, and
an upper limit value of the second range is 0.

(Configuration 8)

The control apparatus (100) according to any one of Configurations 1 to 3, wherein

the calculation unit (10) calculates the risk value using a risk function,
the risk function includes a term given by

$$H(x) \times (v_{obs}^2/D) \times f(S_{cur}),$$

where x denotes a cosine of an angle formed by a relative movement direction of the object (400) with respect to the manipulator (202) and a line connecting the object (400) and the manipulator (202), $v_{obs}$ denotes a velocity of the object (400), D denotes a distance between the manipulator (202) and the object (400), and $S_{cur}$ denotes a length from the start position to a current position of the manipulator (202) along the trajectory of the manipulator (202), $H(x)$ becomes larger as x becomes closer to 1, and
$f(S_{cur})$ becomes larger as L becomes longer.

(Configuration 9)

The control apparatus (100) according to Configuration 8, wherein

H(x) includes a hyperbolic tangent function.

(Configuration 10)

The control apparatus (100) according to Configuration 8 or 9, wherein
$f(S_{cur})$ includes a sigmoid function.

(Configuration 11)

The control apparatus (100) according to Configuration 2, wherein
a ratio of a movement velocity of the manipulator (202) in the second operation to the standard velocity becomes smaller as a length from the start position to a current position of the manipulator (202) along the trajectory of the manipulator (202) becomes longer.

(Configuration 12)

The control apparatus (100) according to any one of Configurations 1 to 3, wherein
the calculation unit (10) calculates the risk value such that the risk value becomes larger as an amount of loading of the manipulator (202) becomes larger.

(Configuration 13)

The control apparatus (100) according to any one of Configurations 1 to 3, wherein

the calculation unit (10) calculates the risk value using a risk function including a term and a constant term, the term including a distance between the object (400) and the manipulator (202) and a velocity of the object (400), and the constant term is set in accordance with a human that works cooperatively with the robot.

(Configuration 14)

A control method for controlling a robot (200) such that a manipulator (202) of the robot (200) moves from a start position to a goal position, the control method comprising:

calculating a risk value of interference between the manipulator (202) and an object (400);
generating a command for causing the manipulator (202) to operate, based on a target operation selected in accordance with the risk value from a group including a plurality of types of operations; and
setting a first group as the group when the manipulator (202) is closer to the start position than a reference position, and setting a second group as the group when the manipulator (202) is closer to the goal position than the reference position, wherein
the first group includes a first operation as an operation when the risk value is within a first range, the first operation being an operation that changes a trajectory to lower the risk value, and
the second group includes:

the first operation as an operation when the risk value is within a first subrange that is a part of the first range; and
a second operation as an operation when the risk value is within a second subrange of the first range different from the first subrange, the second operation being an operation that reduces a velocity without changing the trajectory.

(Configuration 15)

A program (130) that causes a computer (100) to perform the control method as recited in Configuration 14.
Although the embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

REFERENCE SIGNS LIST

1 system; 10 calculation unit; 12 generation unit; 14 setting unit; 100 control apparatus; 110 control process circuit; 112 processor; 114 main memory; 116 storage; 118 interface circuit; 120 field network controller; 130 system program; 132 teaching data; 200 robot; 202 manipulator; 204 manipulator controller; 211 to 213 arm; 221 to 223 joint; 230 rotator; 240 base; 300 sensing device; 400 human; 500 voxel; PE goal position; PS start position; Ra to Rc range; Rb-1, Rb-2 subrange.

**Claims**

1. A control apparatus for controlling a robot such that a manipulator of the robot moves from a start position to a goal position, the control apparatus comprising:

   a calculation unit that calculates a risk value of interference between the manipulator and an object;
   a generation unit that generates a command for causing the manipulator to operate, based on a target operation selected in accordance with the risk value from a group including a plurality of types of operations; and
   a setting unit that sets a first group as the group when the manipulator is closer to the start position than a reference position, and sets a second group as the group when the manipulator is closer to the goal position than the reference position, wherein
   the first group includes a first operation as an operation when the risk value is within a first range, the first operation being an operation that changes a trajectory to lower the risk value, and
   the second group includes:

      the first operation as an operation when the risk value is within a first subrange that is a part of the first range; and
      a second operation as an operation when the risk value is within a second subrange of the first range different from the first subrange, the second operation being an operation that reduces a velocity without changing the trajectory.

2. The control apparatus according to claim 1, wherein

   each of the first group and the second group includes a third operation as an operation when the risk value is within a second range that is below the first range, the third operation being an operation that causes the manipulator to operate at a standard velocity without changing the trajectory of the manipulator, and
   the second operation causes the manipulator to operate at a velocity lower than the standard velocity.

3. The control apparatus according to claim 1, wherein
   each of the first group and the second group includes a fourth operation as an operation when the risk value is within a third range that is above the first range, the fourth operation being an operation that returns the manipulator toward the start position.

4. The control apparatus according to any one of claims 1 to 3, wherein
   the calculation unit calculates the risk value such that the risk value becomes larger as an angle formed by a relative movement direction of the object with respect to the manipulator and a line connecting the object and the manipulator becomes closer to 0°.

5. The control apparatus according to any one of claims 1 to 3, wherein
   the calculation unit calculates the risk value such that the risk value becomes larger as a velocity of the object becomes higher, and calculates the risk value such that the risk value becomes larger as a distance between the object and the manipulator becomes shorter.

6. The control apparatus according to any one of claims 1 to 3, wherein
   the calculation unit calculates the risk value such that the risk value becomes larger as a length from the start position to a current position of the manipulator along the trajectory of the manipulator becomes longer.

7. The control apparatus according to claim 2, wherein

the calculation unit calculates the risk value using a risk function including a term and a constant term, the term including a distance between the object and the manipulator and a velocity of the object,
a value of the constant term is negative, and
an upper limit value of the second range is 0.

8. The control apparatus according to any one of claims 1 to 3, wherein

the calculation unit calculates the risk value using a risk function,
the risk function includes a term given by

$$H(x) \times (v_{obs}^2/D) \times f(S_{cur}),$$

where x denotes a cosine of an angle formed by a relative movement direction of the object with respect to the manipulator and a line connecting the object and the manipulator, $v_{obs}$ denotes a velocity of the object, D denotes a distance between the manipulator and the object, and $S_{cur}$ denotes a length from the start position to a current position of the manipulator along the trajectory of the manipulator,
H(x) becomes larger as x becomes closer to 1, and
$f(S_{cur})$ becomes larger as L becomes longer.

9. The control apparatus according to claim 8, wherein
H(x) includes a hyperbolic tangent function.

10. The control apparatus according to claim 8, wherein
$f(S_{cur})$ includes a sigmoid function.

11. The control apparatus according to claim 2, wherein
a ratio of a movement velocity of the manipulator in the second operation to the standard velocity becomes smaller as a length from the start position to a current position of the manipulator along the trajectory of the manipulator becomes longer.

12. The control apparatus according to any one of claims 1 to 3, wherein
the calculation unit calculates the risk value such that the risk value becomes larger as an amount of loading of the manipulator becomes larger.

13. The control apparatus according to any one of claims 1 to 3, wherein

the calculation unit calculates the risk value using a risk function including a term and a constant term, the term including a distance between the object and the manipulator and a velocity of the object, and
the constant term is set in accordance with a human that works cooperatively with the robot.

14. A control method for controlling a robot such that a manipulator of the robot moves from a start position to a goal position, the control method comprising:

calculating a risk value of interference between the manipulator and an object;
generating a command for causing the manipulator to operate, based on a target operation selected in accordance with the risk value from a group including a plurality of types of operations; and
setting a first group as the group when the manipulator is closer to the start position than a reference position, and setting a second group as the group when the manipulator is closer to the goal position than the reference position, wherein
the first group includes a first operation as an operation when the risk value is within a first range, the first operation being an operation that changes a trajectory to lower the risk value, and
the second group includes:

the first operation as an operation when the risk value is within a first subrange that is a part of the first range; and
a second operation as an operation when the risk value is within a second subrange of the first range different from the first subrange, the second operation being an operation that reduces a velocity without changing the trajectory.

15. A program that causes a computer to perform the control method as recited in claim 14.

FIG.1

FIG.2

FIG.3

FIELD NETWORK

100

120

**FIELD NETWORK CONTROLLER**

110

112

**PROCESSOR**

114

**MAIN MEMORY**

116

**STORAGE**

130

SYSTEM PROGRAM

132

TEACHING DATA

118

**INTERFACE CIRCUIT**

200

FIG.4

500

FIG.5

$$\text{Sigmoid}_{(\text{Scur, Sthrd})} = \frac{1}{1 + e^{-a(\text{Scur} - \text{Sthrd})}}$$

## FIG.6

FIG.7

$$H_{dict}=K\left(1+\frac{e^{b(x-xthrd)}-e^{-b(x-xthrd)}}{e^{b(x-xthrd)}+e^{-b(x-xthrd)}}\right)$$

$$(K=\frac{3}{2}, b=10, xthrd=0.999)$$

FIG.8

FIG.9

```
                    ┌─────────┐
                    │  START  │
                    └────┬────┘
                         │              ╭─ S1
          ┌──────────────▼──────────────┐
          │   OBTAIN POINT CLOUD DATA   │
          └──────────────┬──────────────┘
                         │              ╭─ S2
          ┌──────────────▼──────────────┐
          │      GENERATE OctoMap       │
          └──────────────┬──────────────┘
                         │              ╭─ S3
          ┌──────────────▼──────────────┐
          │     SET OPERATION GROUP     │
          └──────────────┬──────────────┘
                         │              ╭─ S4
          ┌──────────────▼──────────────┐
          │    CALCULATE RISK VALUE     │
          └──────────────┬──────────────┘
                         │              ╭─ S5
          ┌──────────────▼──────────────┐
          │   SELECT TARGET OPERATION   │
          │   CORRESPONDING TO RISK     │
          │   VALUE FROM SET GROUP      │
          └──────────────┬──────────────┘
                         │              ╭─ S6
          ┌──────────────▼──────────────┐
          │ OUTPUT COMMAND CORRESPONDING│
          │    TO TARGET OPERATION      │
          └──────────────┬──────────────┘
                         │
                    ┌────▼────┐
                    │   END   │
                    └─────────┘
```

23

FIG.10

| | |
|---|---|
| $\theta \cong 0$<br>v<br>$\leftarrow$ --------------------------- $\circ$ --- 400<br>$\circ$ $\longrightarrow$ $\leftarrow$ --- $\leftarrow$<br>TCP(202) $v_{tcp}$ $v_{obs}$<br>$v_{obs} - v_{tcp}$ | $H_{dict} \cong 1$ |
| $\theta$<br>$v_{obs} - v_{tcp}$ $\circ$ --- 400<br>$\downarrow v_{obs}$<br>v<br>$\circ$ $\longrightarrow$<br>TCP(202) $v_{tcp}$ | $H_{dict} > 0.5$ |
| $v_{obs} - v_{tcp}$ $\circ$ --- 400<br>$\theta$ $\downarrow$ $v_{obs}$<br>v<br>$\circ$ $\longrightarrow$<br>TCP(202) $v_{tcp}$ | $H_{dict} < 0.5$ |
| $v_{obs} - v_{tcp}$ $\circ$ --- 400 --- v<br>$\theta$ $\downarrow$ $\circ$ $\longrightarrow$<br>$v_{obs}$ TCP(202) $v_{tcp}$ | $H_{dict} \cong 0$ |

## INTERNATIONAL SEARCH REPORT

International application No.

**PCT/JP2022/019089**

### A. CLASSIFICATION OF SUBJECT MATTER

***B25J 19/06***(2006.01)i
FI:   B25J19/06

According to International Patent Classification (IPC) or to both national classification and IPC

### B. FIELDS SEARCHED

Minimum documentation searched (classification system followed by classification symbols)

B25J19/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-206080 A (MITSUBISHI ELECTRIC CORP) 05 December 2019 (2019-12-05)<br>paragraphs [0011]-[0099], fig. 1-20 | 1-15 |
| A | JP 2019-123022 A (HITACHI LTD) 25 July 2019 (2019-07-25)<br>paragraphs [0014]-[0076], fig. 1-14 | 1-15 |
| A | WO 2019/097676 A1 (MITSUBISHI ELECTRIC CORP) 23 May 2019 (2019-05-23)<br>paragraphs [0033]-[0034] | 13 |

☐ Further documents are listed in the continuation of Box C.    ☑ See patent family annex.

| | |
|---|---|
| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **12 July 2022** | **26 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/019089**

| Patent document cited in search report | | | Publication date (day/month/year) | Patent family member(s) | | | Publication date (day/month/year) |
|---|---|---|---|---|---|---|---|
| JP | 2019-206080 | A | 05 December 2019 | (Family: none) | | | |
| JP | 2019-123022 | A | 25 July 2019 | US | 2019/0217472 | A1 | |
| | | | | paragraphs [0027]-[0091], fig. 1-14 | | | |
| | | | | CN | 110026977 | A | |
| WO | 2019/097676 | A1 | 23 May 2019 | US | 2021/0073096 | A1 | |
| | | | | paragraphs [0049]-[0050] | | | |
| | | | | KR | 10-2020-0054327 | A | |
| | | | | CN | 111372735 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JUSTINAS MISEIKIS et al.** Multi 3D camera mapping for predictive and reflexive robot manipulator trajectory estimation. *2016 IEEE Symposium Series on Computational Intelligence (SSCI)*